# EUROPEAN PATENT APPLICATION

(11) **EP 4 600 032 A1**
(43) Date of publication of application: **13.08.2025**
(21) Application number: 25151472.5
(22) Date of filing: 13.01.2025
(51) Int. Cl.: B32B 1/00, B32B 3/04, B32B 3/26, B32B 27/36, H01M 50/124, H01M 50/129, H01M 50/136

(54) **BATTERY CORE, CASE BODY, BATTERY MODULE AND BATTERY PACK**

(30) Priority: 08.02.2024 CN 202420294440 U
(71) Applicant: AESC Japan Ltd., Kanagawa, 2520012 (JP)
(72) Inventor: ZHAO, Gongwei, Jiangyin City, Wuxi City, Jiangsu Province 214443 (CN)
(74) Representative: Becker, Eberhard

(57) **Abstract**

The disclosure provides a battery core, a case body (100), a battery module, and a battery pack. The battery core provided by the disclosure includes the following. A case body (100) is provided, and the case body (100) has side surfaces (110) and a bottom surface (120) connected to each other. A composite layer (200) includes a shear resistant layer (210) and a connection layer (220). The shear resistant layer (210) is connected to the case body (100) through the connection layer (220). At least one of the shear resistant layer (210) and the connection layer (220) is an insulation layer, and the composite layer (200) covers at least one of at least part of the side surfaces (110) and at least part of the bottom surface (120).

## Description

### BACKGROUND

### Technical Field

The disclosure relates to the field of battery technology, and particularly relates to a battery core, a case body, a battery module, and a battery pack.

### Description of Related Art

With the development of new energy vehicles, the demand for power batteries continues to increase. Generally, a power battery pack comprises multiple battery modules, and a battery module comprises multiple battery cores.

In a method known to persons skilled in the art, the surface of the battery core is covered with an insulation film. When the battery cores are connected to each other, the insulation films keep two adjacent battery cores insulated.

### SUMMARY

The disclosure provides a battery core, a case body, a battery module, and a battery pack that can ensure the shear strength of a composite layer covering the surface of the battery core and improve the reliability of the battery core during use.

In order to achieve the above purpose, the disclosure provides technical solutions as follows.

The first aspect of the disclosure provides a battery core, which includes the following.

A case body is provided. The case body has side surfaces and a bottom surface connected to each other.

A composite layer is provided. The composite layer includes a shear resistant layer and a connection layer. The shear resistant layer is connected to the case body through the connection layer. At least one of the shear resistant layer and the connection layer is an insulation layer. The composite layer covers at least one of at least part of the side surfaces and at least part of the bottom surface.

The beneficial effects of the disclosure are as follows. The shear resistant layer is connected to the case body through the connection layer, and the composite layer can protect the surface of the case body. The existence of the shear resistant layer can ensure the shear strength of the composite layer covering the surface of the battery core. Therefore, when the battery core is affected by an external shear force, the composite layer is not likely to rupture, thereby the reliability of the battery core during use is improved.

In a possible implementation, the shear resistant layer and the connection layer are each provided with one layer.

Alternatively, both the shear resistant layer and the connection layer are provided with a plurality of layers, and each of of the plurality of layers of the shear resistant layer and each of of the plurality of layers of the connection layer are alternately stacked and disposed sequentially.

In this way, when the shear resistant layer and the connection layer are each provided with one layer, the processing and formation of the composite layer is facilitated; when the shear resistant layer and the connection layer are provided with a plurality of layers, the shear strength of the composite layer can be further ensured.

In a possible implementation, the shear resistant layer is a PET layer.

And/or, the connection layer is a photo-cured layer or a temperature-cured layer.

And/or, when there is one layer of each of the shear resistant layer and the connection layer, the thickness range of both the shear resistant layer and the connection layer is 40-60µm.

In this way, the thickness of the shear resistant layer is within this range, which can ensure the shear strength of the shear resistant layer; and the thickness of the connection layer is within this range, which can ensure the connection strength of the connection layer.

In a possible implementation, the shear strength of the composite layer is not less than 1.4MPa.

And/or, the thickness range of the composite layer is 80-120µm.

In this way, the shear strength of the composite layer is within this range, which can ensure the ability of the composite layer to resist the external shear force; and the thickness of the composite layer is within this range, which can ensure the shear strength of the composite layer.

In a possible implementation, the composite layer covers the entire bottom surface; and/or, the composite layer covers part of the side surfaces, and areas on the side surfaces not covered with the composite layer are covered with gel.

In this way, the gel covering the side surface may play the role of connection, and two adjacent battery cores in the battery module may be connected through the gel.

In a possible implementation, the composite layer on the side surfaces and the bottom surface are integrally formed.

In this way, the composite layer are integrally formed, which can improve the overall shear strength and insulation of the composite layer.

In a possible implementation, the side surfaces include first side surfaces and second side surfaces; and the case body has two first side surfaces opposite to each other, and has two second side surfaces opposite to each other.

The first side surfaces and the second side surfaces are intersected with each other, and the area of the first side surface is larger than the area of the second side surface; and when the composite layer covers at least part of the side surfaces, both the first side surfaces and the second side surfaces are covered with the composite layer.

In this way, the first side surface is a large surface of the battery core, and the second side surface is a small surface of the battery core. The composite layer can protect the first side surface and the second side surface.

In a possible implementation, the composite layer covering the first side surfaces extends to the second side surfaces and covers part of the second side surfaces. Areas on the second side surfaces not covered with the composite layer are window areas, and the window areas are covered with the gel.

The area of the window areas is 40%-80% of the area of the second side surface; and/or, the spacing between the bottom end of the window areas and the bottom surface is not less than 5mm.

In this way, the ratio of the area of the window areas is within this range, which can ensure the bonding area and bonding strength between the gel and the second side surface; and the spacing is within this range, which ensures the protection of the composite layer to the bottom portion of the second side surface.

In a possible implementation, the composite layer has folding areas on the second side surfaces, and the composite layer is folded in the folding areas.

In this way, after the composite layer is disposed in the folding area, the composite layer on the second side surface may be made even, and the shear strength of the composite layer in the folding areas can also be improved.

In a possible implementation, a maximum quantity of folding layers of the composite layer in the folding areas does not exceed 5 layers.

In this way, when the maximum quantity of folding layers does not exceed 5 layers, the overall evenness of the composite layer on the second side surface can be ensured.

The second aspect of the disclosure provides a case body, which has side surfaces and a bottom surface, and at least one of at least part of the side surfaces and at least part of the bottom surface is covered with a composite layer.

The composite layer includes a shear resistant layer and a connection layer. The shear resistant layer is connected to the case body through the connection layer; and at least one of the shear resistant layer and the connection layer is an insulation layer.

The third aspect of the disclosure provides a battery module, which includes the battery cores as described in any of the above implementations. The battery cores are disposed in plural, and the plurality of battery cores are connected to form a battery core assembly.

The fourth aspect of the disclosure provides a battery pack, which includes a battery box and the battery module. The battery box has a containing cavity inside, and the battery module is disposed in the containing cavity.

Therefore, in the battery core provided by the disclosure, the shear resistant layer is connected to the case body through the connection layer, and the composite layer can protect the surface of the case body; and the existence of the shear resistant layer can ensure the shear strength of the composite layer covering the surface of the battery core. Therefore, when the battery core is affected by the external shear force, the composite layer is not likely to rupture under the action of the external shear force, thereby the reliability of the battery core during use is improved. In addition, the existence of the connection layer can improve the connection strength between the composite layer and the case body.

The structure of the disclosure, as well as other inventive purposes and beneficial effects according to the disclosure will be more comprehensible by describing the specific embodiments together with the accompanying drawings.

### BRIEF DESCRIPTION OF THE DRAWINGS

In order to clearly illustrate the embodiments of the disclosure or the technical solution in the related art, the drawings to be used in the description of the embodiments or the related art will be briefly introduced below. Certainly, the drawings in the following description are some embodiments of the disclosure. For persons of ordinary skill in the art, other drawings may be obtained based on the drawings without exerting creative efforts.
FIG. 1 is a three-dimensional view of a battery core provided by an embodiment of the disclosure.
FIG. 2 is a front view of the battery core provided by an embodiment of the disclosure.
FIG. 3 is a cross-sectional view of position A to position A in FIG. 2.
FIG. 4 is an enlarged view of position B in FIG. 3.
FIG. 5 is another view corresponding to FIG. 4.
FIG. 6 is a left view of the battery core provided by an embodiment of the disclosure.
FIG. 7 is a view of FIG. 6 after removing the composite layer.
FIG. 8 is another view corresponding to FIG. 6.

### DESCRIPTION OF THE EMBODIMENTS

In a method known to persons skilled in the art, when the battery cores in the battery module are connected to each other, the insulation films covering the surfaces of the battery cores keep two adjacent battery cores insulated. However, the insulation film covering the surface of the battery core in the related art has the problem of low shear strength. When the battery core is affected by an external shear force, the insulation film is likely to rupture, thus the reliability of the battery core during use is affected.

Based on the above problems, an embodiment of the disclosure provides a battery core, a case body, a battery module, and a battery pack. The battery module and the battery pack both include the battery core. The battery core includes the case body and a composite layer. The composite layer includes a shear resistant layer and a connection layer. The shear resistant layer is connected to the case body through the connection layer; at least one of the shear resistant layer and the connection layer is an insulation layer; and the composite layer covers at least one of at least part of side surfaces and at least part of a bottom surface on the case body. Therefore, after the shear resistant layer is connected to the surface of the case body through the connection layer, the shear strength of the composite layer covering the surface of the battery core can be ensured, thereby the reliability of the battery core during use is improved.

In order to make the purpose, technical solutions, and advantages of embodiments of the disclosure clearer, the technical solutions of the embodiments of the disclosure will be clearly and completely described below together with the drawings of the embodiments of the disclosure. Certainly, the embodiments described are part of the embodiments of the disclosure rather than all embodiments. Based on the embodiments in the disclosure, all other embodiments obtained by persons of ordinary skill in the art without creative work fall within the scope of protection of the disclosure.

The technical solutions of the disclosure and how the technical solutions of the disclosure solve the above technical problems will be described in detail below with specific embodiments. The following specific embodiments may be combined with each other, and the same or similar concepts or processes may not be repeated in some embodiments.

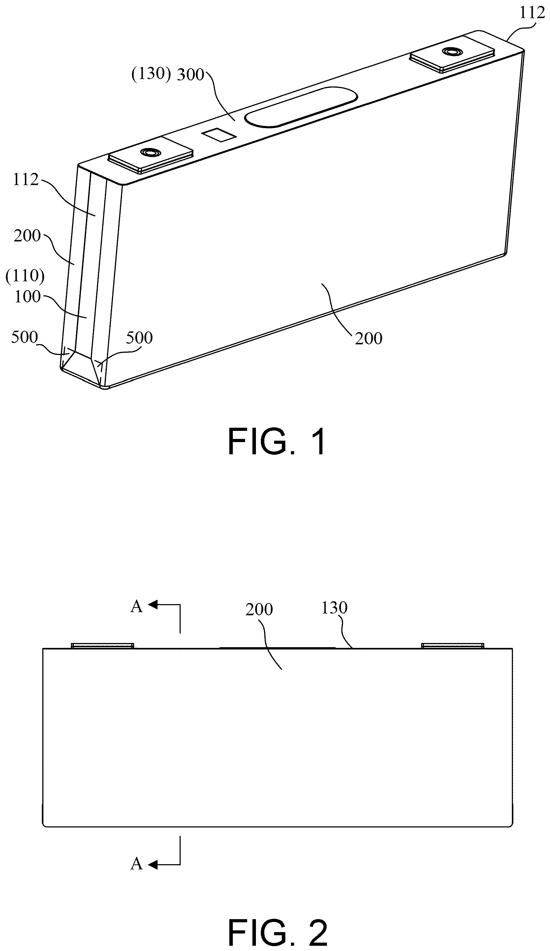

The structure of the battery core provided by an embodiment of the disclosure will be described in detail below with reference to FIG. 1 to FIG. 8.

As shown in FIG. 1 to FIG. 4, the battery core provided by the disclosure includes the following.

A case body 100 is provided. The case body 100 has side surfaces 110 and a bottom surface 120. In addition, the case body 100 further has a top surface 130, and the side surfaces 110 are connected between the bottom surface 120 and the top surface 130. The case body 100 is disposed with an electrolyte 600 disposed inside.

A composite layer 200 is provided. The composite layer 200 includes a shear resistant layer 210 and a connection layer 220. The shear resistant layer 210 is connected to the case body 100 through the connection layer 220; at least one of the shear resistant layer 210 and the connection layer 220 is an insulation layer; and the composite layer 200 covers at least one of at least part of the side surfaces 110 and at least part of the bottom surface 120. It should be noted that the side surfaces 110 and the bottom surface 120 of the case body 100 are susceptible to external forces. After the composite layer 200 covers at least part of the side surfaces 110 and at least part of the bottom surface 120, the composite layer 200 can protect the side surfaces 110 and/or the bottom surface 120. For example, when the bottom portion of the battery core is connected to the bottom plate of the battery box through gel connection, during the process of removing the battery core from the bottom plate, the bottom surface 120 of the case body 100 is subjected to the shear force. At this time, the composite layer 200 may be used to cover at least part of the bottom surface 120, thereby the bottom surface 120 is protected. Alternatively, when the side surfaces 110 of two adjacent battery cores are connected through the gel, during the process of disassembling the two adjacent battery cores, the side surfaces 110 of the case body 100 are also subjected to the shear force. At this time, the composite layer 200 may be used to cover at least part of the side surfaces 110, thereby the side surfaces 110 are protected. Alternatively, when both the side surfaces 110 and the bottom surface 120 of the case body 100 are subjected to the external shear force, the composite layer 200 may also cover at least part of the side surfaces 110 and at least part of the bottom surface 120 at the same time, thereby the side surfaces 110 and the bottom surface 120 are protected simultaneously.

Specifically, there may be only one insulation layer of the shear resistant layer 210 and the connection layer 220, or both the shear resistant layer 210 and the connection layer 220 may be the insulation layer. Therefore, after the composite layer 200 covers the surface of the case body 100, the insulation between the two adjacent battery cores can be ensured.

Specifically, when the composite layer 200 covers the side surfaces, the operation may be only part of the side surfaces 110 is covered, or the entire side surfaces are covered; and when the composite layer 200 covers the bottom surface, the operation may be only part of the bottom surface 120 is covered, or the entire bottom surface 120 is covered.

Therefore, in the battery core provided by the disclosure, the shear resistant layer 210 is connected to the case body 100 through the connection layer 220, and the composite layer 200 can protect the surface of the case body 100. The existence of the shear resistant layer 210 can ensure the shear strength of the composite layer 200 covering the surface of the battery core. Therefore, when the battery core is affected by the external shear force, the composite layer 200 is not likely to rupture under the action of the external shear force, thereby the reliability of the battery core during use is improved. In addition, the existence of the connection layer 220 can improve the connection strength between the composite layer 200 and the case body 100.

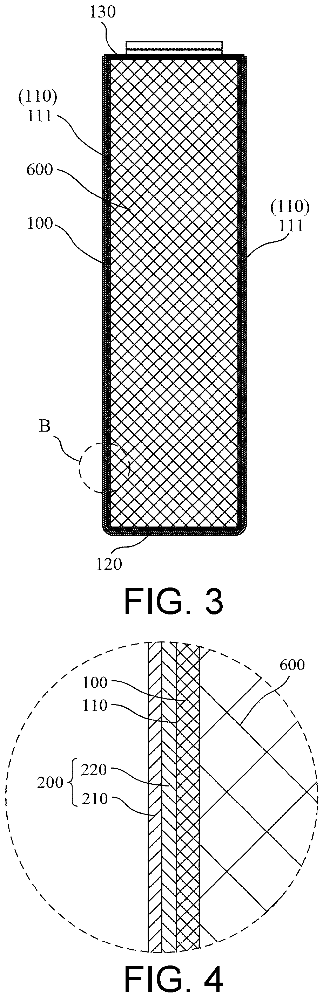

In a specific embodiment, as shown in FIG. 4, the shear resistant layer 210 and the connection layer 220 are each provided with one layer. Therefore, one shear resistant layer 210 is connected to one connection layer 220, which can simplify the structure of the composite layer 200 and facilitate the processing and formation of the composite layer 200.

Specifically, when the shear resistant layer 210 and the connection layer 220 are each provided with one layer, the thickness range of both the shear resistant layer 210 and the connection layer 220 is 40-60 µm. The thickness of the shear resistant layer 210 is within this range, which can reduce the weight and cost of the shear resistant layer 210 while ensuring the shear strength of the shear resistant layer 210; and the thickness of the connection layer 220 is within this range, which can reduce the weight and cost of the connection layer 220 while ensuring the connection strength of the connection layer 220.

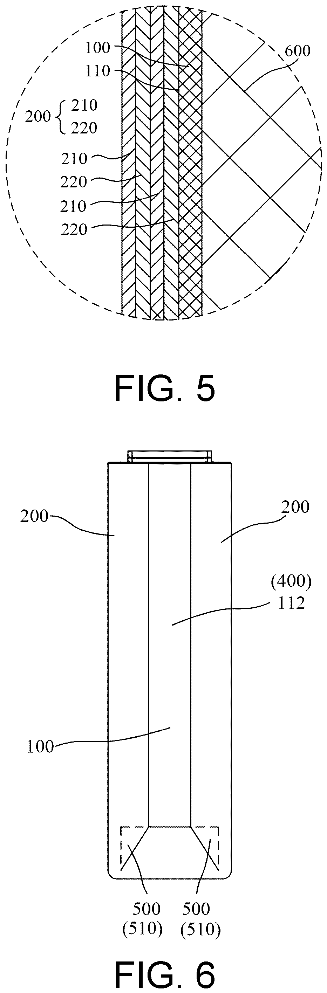

In another specific embodiment, as shown in FIG. 5, both the shear resistant layer 210 and the connection layer 220 are provided with multiple layers, and the multiple shear resistant layers 210 and the multiple connection layers 220 are alternately stacked and disposed sequentially. Therefore, the multiple shear resistant layers 210 and the multiple connection layers 220 cooperate with each other to further ensure the shear strength of the composite layer 200 and ensure the reliability of the battery core during use. Specifically, as shown in FIG. 5, the shear resistant layer 210 and the connection layer 220 are each provided with two layers, and the two shear resistant layers 210 and the two connection layers 220 are alternately stacked and disposed sequentially.

Specifically, the thickness range of the composite layer 200 is 80-120µm. The thickness of the composite layer 200 is within this range, which can ensure the shear strength of the composite layer 200. When both the shear resistant layer 210 and the connection layer 220 are provided with multiple layers, the sum of the thicknesses of the multiple shear resistant layers 210 and the multiple connection layers 220 is the thickness of the composite layer 200.

For example, the shear resistant layer 210 may be a PET layer. PET has a good shear resistance, wear and friction resistance, dimensional stability, and electrical insulation, thereby the performance of the composite layer 200 is improved.

For example, the connection layer 220 is a photo-cured layer or a temperature-cured layer. Specifically, the connection layer 220 is photo-cured glue or temperature-cured glue. When the connection layer 220 is the photo-cured glue, the connection layer 220 may use epoxy system cationic glue. Therefore, the connection layer 220 may be quickly cured under ultraviolet light irradiation, and the cured connection layer 220 has a good chemical corrosion resistance, wear resistance, and heat resistance. When the connection layer 220 is the temperature-cured glue, the connection layer 220 may use epoxy resin. The connection layer 220 may form a dense structure and a fixed shape after heat curing under a specific temperature. In addition, after being cured, the connection layer 220 can also withstand a certain shear force, thereby the shear strength of the composite layer 200 is improved.

In an embodiment of the disclosure, the shear strength of the composite layer 200 is not less than 1.4MPa. Specifically, the shear strength of the composite layer 200 may be in a range of 1.4-5.5MPa. The shear strength of the composite layer 200 is within this range, which can ensure the ability of the composite layer 200 to resist the external shear force and reduce the cost of the composite layer 200.

In an embodiment of the disclosure, the composite layer 200 may be covered on the surface of the case body 100 first. After the covering using the composite layer 200 is completed, a case cover 300 may be welded on the top portion of the case body 100. Alternatively, the case cover 300 may be welded on the top portion of the case body 100 first, and then the composite layer 200 is covered on the surface of the case body 100.

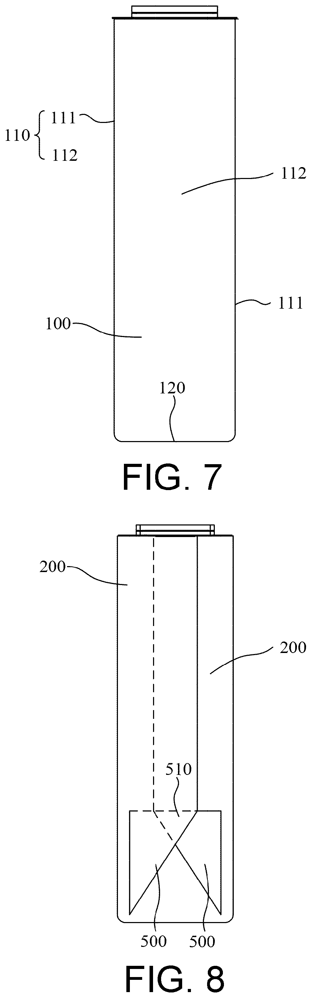

In an embodiment of the disclosure, as shown in FIG. 6 and FIG. 7, the composite layer 200 covers the entire bottom surface 120. Since the bottom surface 120 of the case body 100 is subjected to a large shear force, after the composite layer 200 covers the entire bottom surface 120, the composite layer 200 can protect the entire bottom surface 120. In addition, the composite layer 200 covers part of the side surfaces 110, and areas on the side surfaces 110 not covered with the composite layer 200 are covered with gel. The gel covering the side surfaces 110 may play the role of connection, two adjacent battery cores in the battery module may be connected through the gel, or the battery core and the side plate of the battery module may be connected through the gel.

It should be noted that the bonding force between the gel and the composite layer 200 is weak; in comparison, the bonding force between the gel and the side surface 110 of the case body 100 is strong, which can improve the reliability of the connection between two adjacent battery cores.

In an embodiment of the disclosure, the composite layer 200 on the side surfaces 110 and the bottom surface 120 is integrally formed. For example, the composite layer 200 is one film layer, and the film layer covers the side surfaces 110 and the bottom surface 120 simultaneously. After the composite layer 200 is integrally formed, the overall shear strength and insulation of the composite layer 200 can be improved.

In an embodiment of the disclosure, as shown in FIG. 1 to FIG. 3, the side surfaces 110 include first side surfaces 111 and second side surfaces 112. The case body 100 has two first side surfaces 111 opposite to each other, and two second side surfaces 112 opposite to each other. The first side surfaces 111 and the second side surfaces 112 are intersected with each other, and the area of the first side surface 111 is larger than the area of the second side surface 112. When the composite layer 200 covers at least part of the side surfaces 110, both the first side surfaces 111 and the second side surfaces 112 are covered with the composite layer 200. The first side surface 111 is a large surface of the battery core, and the second side surface 112 is a small surface of the battery core. The composite layer 200 can protect the first side surfaces 111 and the second side surfaces 112. Specifically, the first side surface 111 and the second side surface 112 are disposed perpendicularly to each other, and at this time, the battery core is formed in a square shape. In addition, the battery core may also be formed in a column shape, and the side surfaces 110 of the battery core are columnar surfaces.

Specifically, as shown in FIG. 1 and FIG. 6, the composite layer 200 covering the first side surfaces 111 extends to the second side surfaces 112, and covers part of the second side surfaces 112. Areas on the second side surfaces 112 not covered with the composite layer 200 are window areas 400, and the window areas 400 are covered with gel. The gel covering the second side surfaces 112 may play the role of connection. When two adjacent battery cores in the battery module are connected, the window areas 400 of the two battery cores are opposite to each other and disposed closely to be tiled, so that the two adjacent battery cores are connected through the gel, which improves the reliability of the connection between the two adjacent battery cores.

For example, the area of the window areas 400 is 40%-80% of the area of the second side surface 112. The ratio of the area of the window areas 400 is within this range, which can ensure the bonding area and bonding strength between the gel and the second side surface 112, which improves the reliability of the connection between two adjacent battery cores, thereby the safety and the stability of the battery module and the battery pack are improved. Further, the ratio of the area of the window areas 400 is in a range of 50% to 70%. Within this range, the bonding area and bonding strength between the gel and the second side surface 112 can be ensured. At the same time, the coverage area of the composite layer 200 on the second side surface 112 can also be ensured.

For example, the spacing between the bottom end of the window areas 400 and the bottom surface 120 is not less than 5mm. As shown in FIG. 6, the second side surface 112 located between the window areas 400 and the bottom surface 120 is covered with the composite layer 200. The spacing between the bottom end of the window areas 400 and the bottom surface 120 is the height of the portion of the composite layer 200. The spacing is within this range, which ensures the protection of the composite layer 200 to the bottom portion of the second side surface 112.

Further, as shown in FIG. 6 and FIG. 8, the composite layer 200 has folding areas 500 on the second side surfaces 112, and the composite layer 200 is folded in the folding areas 500. It should be noted that when the composite layer 200 is a film layer, during the process of wrapping the surface of the case body 100, the film layer forms excess film material in the corner area of the film layer. At this time, the excess film material may be folded. Through this disposition, the composite layer 200 is folded in the folding areas 500, which can make the composite layer 200 on the second side surface 112 evenly disposed, and the shear strength of the composite layer 200 can also be improved.

Specifically, a maximum quantity of folding layers of the composite layer 200 in the folding areas 500 does not exceed 5 layers. The maximum quantity of folding layers does not exceed 5 layers, which can ensure the overall evenness of the composite layer 200 on the second side surface 112.

As shown in FIG. 6, the composite layer 200 has two folding areas 500 on each second side surface 112, and the two folding areas 500 do not overlap. At this time, the two folding areas 500 are maximum folding layer quantity areas 510, and the maximum quantity of folding layers of the composite layer 200 in the maximum folding layer quantity area 510 is 3 layers. At this time, there is the window areas 400 on the second side surface 112, and the film-wrapping structure on the battery core is a half-wrapped structure.

As shown in FIG. 8, the composite layer 200 has two folding areas 500 on each second side surface 112, and the two folding areas 500 overlap. At this time, the overlapping area of the two folding areas 500 is the maximum folding layer quantity area 510, and the maximum quantity of folding layers of the composite layer 200 in the maximum folding layer quantity area 510 is 5 layers. At this time, there is no window areas 400 on the second side surface 112, and the film-wrapping structure on the battery core is an all-wrapped structure.

An embodiment of the disclosure further provides the case body 100, as shown in FIG. 1 to FIG. 4. The case body 100 has the side surfaces 110 and the bottom surface 120. In addition, the case body 100 further has the top surface 130, and the side surfaces 110 are connected between the bottom surface 120 and the top surface 130. The case body 100 is disposed with the electrolyte 600 disposed inside to form the main body of the battery core.

Further, at least one of at least part of the side surfaces 110 and at least part of the bottom surface 120 is covered with the composite layer 200. The side surfaces 110 and the bottom surface 120 of the case body 100 are susceptible to external forces. After the composite layer 200 covers at least part of the side surfaces 110 and at least part of the bottom surface 120, the composite layer 200 can protect the side surfaces 110 and/or the bottom surface 120. For example, when the bottom portion of the case body 100 is connected to the bottom plate of the battery box through gel connection, during the process of removing the case body 100 from the bottom plate, the bottom surface 120 of the case body 100 is subjected to the shear force. At this time, the composite layer 200 may be used to cover at least part of the bottom surface 120, thereby the bottom surface 120 is protected. Alternatively, when the side surfaces 110 of two adjacent case bodies 100 are connected through the gel, during the process of disassembling the two adjacent case bodies 100, the side surfaces 110 of the case body 100 are also subjected to the shear force. At this time, the composite layer 200 may be used to cover at least part of the side surfaces 110, thereby the side surfaces 110 are protected. Alternatively, when both the side surfaces 110 and the bottom surface 120 of the case body 100 are subjected to the external shear force, the composite layer 200 may also cover at least part of the side surfaces 110 and at least part of the bottom surface 120 at the same time, thereby the side surfaces 110 and the bottom surface 120 are protected simultaneously.

In addition, when the composite layer 200 covers the side surfaces 110, the operation may be only part of the side surfaces 110 is covered, or the entire side surfaces are covered; and when the composite layer 200 covers the bottom surface 120, the operation may be only part of the bottom surface 120 is covered, or the entire bottom surface 120 is covered.

Specifically, the composite layer 200 includes the shear resistant layer 210 and the connection layer 220. The shear resistant layer 210 is connected to the case body 100 through the connection layer 220; at least one of the shear resistant layer 210 and the connection layer 220 is an insulation layer. For example, only one of the shear resistant layer 210 and the connection layer 220 may be an insulation layer, or both the shear resistant layer 210 and the connection layer 220 may be insulation layers. Therefore, after the composite layer 200 covers the surface of the case body 100, the insulation between two adjacent case bodies 100 can be ensured.

Accordingly, the existence of the shear resistant layer 210 can ensure the shear strength of the composite layer 200 covering the surface of the case body 100. Therefore, when being subjected to the external shear force, the composite layer 200 is not likely to rupture under the action of the external shear force, thereby the reliability of the case body 100 during use is improved.

A detailed description of the specific structure of the case body 100 according to an embodiment provider in the disclosure is as follows.

In a specific embodiment, as shown in FIG. 4, the shear resistant layer 210 and the connection layer 220 are each provided with one layer. Therefore, one shear resistant layer 210 is connected to one connection layer 220, which can simplify the structure of the composite layer 200 and facilitate the processing and formation of the composite layer 200.

Specifically, when the shear resistant layer 210 and the connection layer 220 are each provided with one layer, the thickness range of both the shear resistant layer 210 and the connection layer 220 is 40-60 µm. The thickness of the shear resistant layer 210 is within this range, which can reduce the weight and cost of the shear resistant layer 210 while ensuring the shear strength of the shear resistant layer 210; and the thickness of the connection layer 220 is within this range, which can reduce the weight and cost of the connection layer 220 while ensuring the connection strength of the connection layer 220.

In another specific embodiment, as shown in FIG. 5, both the shear resistant layer 210 and the connection layer 220 are provided with multiple layers, and the multiple shear resistant layers 210 and the multiple connection layers 220 are alternately stacked and disposed sequentially. Therefore, the multiple shear resistant layers 210 and the multiple connection layers 220 cooperate with each other to further ensure the shear strength of the composite layer 200 and ensure the reliability of the case body 100 during use. Specifically, as shown in FIG. 5, the shear resistant layers 210 and the connection layers 220 are each provided with two layers, and the two shear resistant layers 210 and the two connection layers 220 are alternately stacked and disposed sequentially.

Specifically, the thickness range of the composite layer 200 is 80 to 120 µm. The thickness of the composite layer 200 is within this range, which can ensure the shear strength of the composite layer 200. When both the shear resistant layers 210 and the connection layer 220 are provided with multiple layers, the sum of the thicknesses of the multiple shear resistant layers 210 and the multiple connection layers 220 is the thickness of the composite layer 200.

For example, the shear resistant layer 210 may be a PET layer. PET has a good shear resistance, wear and friction resistance, dimensional stability, and electrical insulation, thereby the performance of the composite layer 200 is improved.

For example, the connection layer 220 is a photo-cured layer or a temperature-cured layer. Specifically, the connection layer 220 is photo-cured glue or temperature-cured glue. When the connection layer 220 is the photo-cured glue, the connection layer 220 may use epoxy system cationic glue. Therefore, the connection layer 220 may be quickly cured under ultraviolet light irradiation, and the cured connection layer 220 has a good chemical corrosion resistance, wear resistance, and heat resistance. When the connection layer 220 is the temperature-cured glue, the connection layer 220 may use epoxy resin. The connection layer 220 can form a dense structure and a fixed shape after heat curing under a specific temperature. In addition, after being cured, the connection layer 220 can also withstand a certain shear force, thereby the shear strength of the composite layer 200 is improved.

In an embodiment of the disclosure, the shear strength of the composite layer 200 is not less than 1.4MPa. Specifically, the shear strength of the composite layer 200 may be in a range of 1.4-5.5MPa. The shear strength of the composite layer 200 is within this range, which can ensure the ability of the composite layer 200 to resist the external shear force and reduce the cost of the composite layer 200.

In an embodiment of the disclosure, the composite layer 200 may be covered on the surface of the case body 100 first. After the covering using the composite layer 200 is completed, the case cover 300 may be welded on the top portion of the case body 100. Alternatively, the case cover 300 may be welded on the top portion of the case body 100 first, and then the composite layer 200 is covered on the surface of the case body 100.

In an embodiment of the disclosure, as shown in FIG. 6 and FIG. 7, the composite layer 200 covers the entire bottom surface 120. Since the bottom surface 120 of the case body 100 is subjected to a large shear force, after the composite layer 200 covers the entire bottom surface 120, the composite layer 200 can protect the entire bottom surface 120. In addition, the composite layer 200 covers part of the side surfaces 110, and the areas on the side surfaces 110 not covered with the composite layer 200 are covered with gel. The gel covering the side surfaces 110 may play the role of connection, two adjacent case bodies 100 in the battery module may be connected through the gel, or the case body 100 and the side plate of the battery module may be connected through the gel.

It should be noted that the binding force between the gel and composite layer 200 is weak; in comparison, the binding force between the gel and the side surface 110 of the case body 100 is strong, which can improve the reliability of the connection between two adjacent case bodies 100.

In the embodiment of the disclosure, the composite layer 200 on the side surface 110 and the bottom surface 120 is integrally disposed; for example, the composite layer 200 is a whole film layer that covers the side surface 110 and the bottom surface 120 at the same time. After the composite layer 200 is integrated and disposed, the overall shear strength and insulation of the composite layer 200 can be improved.

In an embodiment of the disclosure, as shown in FIG. 1 to FIG. 3, the side surfaces 110 include the first side surfaces 111 and the second side surfaces 112. The case body 100 has two first side surfaces 111 opposite to each other, and two second side surfaces 112 opposite to each other. The first side surfaces 111 and the second side surfaces 112 are intersected with each other, and the area of the first side surface 111 is larger than the area of the second side surface 112. When the composite layer 200 covers at least part of the side surfaces 110, both the first side surfaces 111 and the second side surfaces 112 are covered with the composite layer 200. The first side surface 111 is a large surface of the case body 100, and the second side surface 112 is a small surface of the case body 100. The composite layer 200 can protect the first side surfaces 111 and the second side surfaces 112. Specifically, the first side surface 111 and the second side surface 112 are disposed perpendicularly to each other, and at this time, the case body 100 is formed in a square shape. In addition, the case body 100 may also be formed in a column shape, and the side surfaces 110 of the case body 100 are columnar surfaces.

Specifically, as shown in FIG. 1 and FIG. 6, the composite layer 200 covering the first side surfaces 111 extends to the second side surfaces 112, and covers part of the second side surfaces 112. Areas on the second side surfaces 112 not covered with the composite layer 200 are the window areas 400, and the window areas 400 are covered with gel. The gel covering the second side surfaces 112 may play the role of connection. When two adjacent case bodies 100 in the battery module are connected, the window areas 400 of the two case bodies 100 are opposite to each other and disposed closely to be tiled, so that the two adjacent case bodies 100 are connected through the gel, which improves the reliability of the connection between the two adjacent case bodies 100.

For example, the area of the window areas 400 is 40%-80% of the area of the second side surface 112. The ratio of the area of the window areas 400 is within this range, which can ensure the bonding area and bonding strength between the gel and the second side surface 112, which improves the reliability of the connection between two adjacent case bodies 100, thereby the safety and the stability of the battery module and the battery pack are improved. Further, the ratio of the area of the window areas 400 is in a range of 50% to 70%. Within this range, the bonding area and bonding strength between the gel and the second side surface 112 can be ensured. At the same time, the coverage area of the composite layer 200 on the second side surface 112 can also be ensured.

For example, the spacing between the bottom end of the window areas 400 and the bottom surface 120 is not less than 5 mm. As shown in FIG. 6, the second side surface 112 located between the window areas 400 and the bottom surface 120 is covered with a portion of the composite layer 200. The spacing between the bottom end of the window areas 400 and the bottom surface 120 is the height of the portion of the composite layer 200. The spacing is within this range, which ensures the protection of the composite layer 200 to the bottom portion of the second side surface 112.

Further, as shown in FIG. 6 and FIG. 8, the composite layer 200 has the folding areas 500 on the second side surfaces 112, and the composite layer 200 is folded in the folding areas 500. It should be noted that when the composite layer 200 is a film layer, during the process of wrapping the surface of the case body 100, the film layer forms excess film material in the corner area of the film layer. At this time, the excess film material may be folded. Through this disposition, the composite layer 200 is folded in the folding areas 500, which can make the composite layer 200 on the second side surface 112 evenly disposed, and the shear strength of the composite layer 200 can also be improved.

Specifically, a maximum quantity of folding layers of the composite layer 200 in the folding areas 500 does not exceed 5 layers. The maximum quantity of folding layers does not exceed 5 layers, which can ensure the overall evenness of the composite layer 200 on the second side surface 112.

As shown in FIG. 6, the composite layer 200 has two folding areas 500 on each second side surface 112, and the two folding areas 500 do not overlap. At this time, the two folding areas 500 are maximum folding layer quantity areas 510, and the maximum quantity of folding layers of the composite layer 200 in the maximum folding layer quantity area 510 is 3 layers. At this time, there is the window areas 400 on the second side surface 112, and the film-wrapping structure on the battery core is a half-wrapped structure.

As shown in FIG. 8, the composite layer 200 has two folding areas 500 on each second side surface 112, and the two folding areas 500 overlap. At this time, the overlapping area of the two folding areas 500 is the maximum folding layer quantity area 510, and the maximum quantity of folding layers of the composite layer 200 in the maximum folding layer quantity area 510 is 5 layers. At this time, there is no window areas 400 on the second side surface 112, and the film-wrapping structure on the battery core is an all-wrapped structure.

Based on the embodiments, the disclosure further provides a battery module, which includes a battery core in any of the embodiments. The battery cores are disposed in plural, and the plurality of battery cores are connected to form a battery core assembly. Specifically, the window areas 400 on the second side surface 112is covered with gel. When two adjacent battery cores in the battery module are connected, the window areas 400 of the two battery cores are opposite to each other and disposed closely to be tiled, so that the two adjacent battery cores are connected through the gel, which improves the reliability of the connection between the two adjacent battery cores.

In addition, the disclosure further provides a battery pack, which includes a battery box and the battery module in the embodiments. The battery box has a containing cavity inside, and the battery module is disposed in the containing cavity. Since the composite layer 200 on the battery core can improve the ability of the battery core to resist the shear force, the working reliability of the battery core, the battery module, and the battery pack all can be improved.

In the description of the disclosure, it should be noted that the orientation descriptions such as "top portion" and "bottom portion" are relative to the structural diagrams of the battery cores in FIG. 2 and FIG. 3, and should not be understood as limitations of the disclosure.

In the description of the disclosure, it should be noted that, unless otherwise expressly specified and limited, terms "installation", "interconnection", and "connection" should be understood in a broad sense. For example, the connection may be a fixed connection, or may be an indirect connection through an intermediary, or may be an internal connection between two elements or an interaction between two elements. For persons of ordinary skill in the art, the specific meanings of the terms in the disclosure may be understood according to specific circumstances.

Devices or elements mentioned in the disclosure or implicitly has to have a specific orientation, be constructed and operated in a specific orientation, and therefore are not to be construed as limitations of the disclosure. In the description of the disclosure, "plurality" means two or more, unless otherwise precisely and specifically stated.

The terms such as "first", "second", "third", and "fourth" in the description and claims of the disclosure and the drawings are used to distinguish similar objects and are not necessarily used to describe a specific order or sequence. It is to be understood that the data so used are interchangeable under appropriate circumstances so that embodiments of the disclosure described herein, for example, may be practiced in sequences other than the sequences illustrated or described herein. Furthermore, the terms "include" and "have" and any variations thereof are intended to cover non-exclusive inclusion, for example, a process, method, system, product, or apparatus that includes a series of steps or units need not be limited to the steps or units that are expressly listed, but may include other steps or units inherent to the equipment that are not expressly listed or that are not specific to the process, method, product, or device.

## Claims

1. A battery core, comprising:
a case body (100), wherein the case body (100) has side surfaces (110) and a bottom surface (120);
a composite layer (200), wherein the composite layer (200) comprises a shear resistant layer (210) and a connection layer (220), the shear resistant layer (210) is connected to the case body (100) through the connection layer (220); at least one of the shear resistant layer (210) and the connection layer (220) is an insulation layer; and the composite layer (200) covers at least one of at least part of the side surfaces (110) and at least part of the bottom surface (120).

2. The battery core according to claim 1, wherein the shear resistant layer (210) and the connection layer (220) are each provided with one layer; or
both the shear resistant layer (210) and the connection layer (220) are provided with a plurality of layers, and each of the plurality of layers of the shear resistant layer (210) and each of the plurality of layers of the connection layer (220) are alternately stacked and disposed sequentially.

3. The battery core according to claim 2, wherein the shear resistant layer (210) is a PET layer;
and/or, the connection layer (220) is a photo-cured layer or a temperature-cured layer;
and/or, when the shear resistant layer (210) and the connection layer (220) are each provided with one layer, a thickness range of the shear resistant layer (210) and a thickness range of the connection layer (220) are both 40-60 µm.

4. The battery core according to any one of claims 1 to 3, wherein a shear strength of the composite layer (200) is not less than 1.4MPa;
and/or, a thickness range of the composite layer (200) is 80-120µm.

5. The battery core according to any one of claims 1 to 3, wherein the composite layer (200) covers the bottom surface (120) entirely;
and/or, the composite layer (200) covers part of the side surfaces (110), and areas on the side surfaces (110) not covered with the composite layer (200) are covered with gel.

6. The battery core according to any one of claims 1 to 3, wherein the composite layer (200) on the side surfaces (110) and the bottom surface (120) are integrally formed.

7. The battery core according to any one of claims 1 to 3, wherein the side surfaces (110) comprise first side surfaces (111) and second side surfaces (112); and the case body (100) has two first side surfaces (111) opposite to each other, and has two second side surfaces (112) opposite to each other; and
the first side surfaces (111) and the second side surfaces (112) are intersected with each other, and an area of the first side surface (111) is larger than an area of the second side surface (112); and when the composite layer (200) covers at least part of the side surfaces (110), both the first side surfaces (111) and the second side surfaces (112) are covered with the composite layer (200).

8. The battery core according to claim 7, wherein the composite layer (200) covering the first side surfaces (111) extends to the second side surfaces (112), and covers part of the second side surfaces (112); and areas on the second side surfaces (112) not covered with the composite layer (200) are window areas (400), and the window areas (400) are covered with gel;
an area of the window areas (400) is 40%-80% of the area of the second side surfaces (112); and/or, a spacing between a bottom end of the window areas (400) and the bottom surface (120) is not less than 5mm.

9. The battery core according to claim 7, wherein the composite layer (200) has folding areas (500) on the second side surfaces (112), and the composite layer (200) is folded in the folding areas (500).

10. The battery core according to claim 9, wherein a maximum quantity of folding layers of the composite layer (200) in the folding areas (500) is 5 or less than 5.

11. A case body (100), comprising side surfaces (110) and a bottom surface (120), wherein at least one of at least part of the side surfaces (110) and at least part of the bottom surface (120) is covered with a composite layer (200); and
the composite layer (200) comprises a shear resistant layer (210) and a connection layer (220), and the shear resistant layer (210) is connected to the case body (100) through the connection layer (220); and at least one of the shear resistant layer (210) and the connection layer (220) is an insulation layer.

12. A battery module, comprising battery cores according to any one of claims 1 to 10, wherein the battery cores are disposed in plural, and the battery cores are connected to form a battery core assembly.

13. A battery pack, comprising a battery box and the battery module according to claim 12, wherein the battery box has a containing cavity inside, and the battery module is disposed in the containing cavity.
